# EUROPÄISCHE PATENTSCHRIFT

(11) **EP 3 892 076 B1**
(45) Veröffentlichungstag und Bekanntmachung des Hinweises auf die Patenterteilung: **29.01.2025**
(21) Anmeldenummer: 21167628.3
(22) Anmeldetag: 09.04.2021
(51) Int. Cl.: A01B 59/043, A01B 59/06, A01B 59/00

(54) **HALTEVORRICHTUNG FÜR EINEN OBERLENKER**
HOLDING DEVICE FOR AN UPPER LINK
DISPOSITIF DE RETENUE POUR UN BRAS SUPÉRIEUR

(30) Priorität: 11.04.2020 DE 202020001522 U
(43) Veröffentlichungstag der Anmeldung: 13.10.2021
(73) Patentinhaber: CLAAS Tractor S.A.S., 78141 Vélizy-Villacoublay Cedex (FR)
(72) Erfinder: Gehrke, Rudolf, 49152 Bad Essen (DE)
(74) Vertreter: CLAAS 365FarmNet GmbH

(56) Entgegenhaltungen:
- EP-A1- 1 982 853
- EP-A1- 2 790 483
- DE-A1- 102015 103 925
- KR-A- 20120 113 526
- KR-A- 20150 007 373

## Beschreibung

Die Erfindung betrifft eine Haltevorrichtung für einen Oberlenker einer Dreipunktanhängevorrichtung zum Anbau von Arbeitsgeräten an einem landwirtschaftlichen Fahrzeug, insbesondere Ackerschlepper.

Landwirtschaftliche Ackerschlepper und einige andere landwirtschaftliche Fahrzeuge verfügen in der Regel über eine Dreipunktanhängevorrichtung zum Anbau von Arbeitsgeräten, die als Kraftheber ausgebildet ist und für Heck- und Frontanbaugeräte nutzbar ist. Mit zunehmender Leistung und Größe der landwirtschaftlichen Fahrzeuge, insbesondere der Ackerschlepper, steigen auch die Hubkräfte der Kraftheber. Infolge der steigenden Hubkräfte müssen die Komponenten der Dreipunktanhängevorrichtung stabiler ausgelegt werden. Damit sich der Oberlenker von der Dreipunktanhängevorrichtung schneller und sicher verstellen lässt, werden zunehmend hydraulisch verstellbare Oberlenker genutzt. Insbesondere diese hydraulischen Ober-lenker, die bis zu 50 Kg wiegen, müssen vom Benutzer beim Kuppelvorgang mit großem Kraftaufwand mit dem Anbaugerät verbunden werden. Weil sich der Benutzer während des Kuppelvorganges zwischen dem Fahrzeug und dem Anbaugerät befindet, besteht somit eine erhebliche Unfallgefahr.

Eine derartige Dreipunktanhängevorrichtung mit einer Haltevorrichtung für einen Oberlenker für landwirtschaftliche Fahrzeuge ist beispielsweise durch die deutsche Patentschrift DE 26 53 907 C2 bekannt. Diese offenbarte Halte-vorrichtung für einen Oberlenker zum Öffnen der Verriegelungseinrichtung des Kupplungshakens weist ein gummielastisches in gleichen Abständen mit Ösen versehenes Band auf, welches in Greifnähe des Fahrersitzes des Schleppers an einem Haken einhängbar ist, sodass der Oberlenker in verschiedenen Stellungen festhaltbar ist. Zum Anhängen eines Arbeitsgerätes wird der Gummizug ausgehängt und der Kupplungshaken des Oberlenkers auf den oberen Gerätebolzen gelegt. Beim Anheben des Gerätes mit Hilfe der Unterlenker, wird der Gerätebolzen in bekannter Weise selbsttätig im Kupplungshaken verriegelt. Durch das Aushängen des Gummizuges beim Anhängen des Arbeitsgerätes muss der Benutzer des Oberlenkers je nach Greifpunkt der Hand etwa die Hälfte der Masse des Oberlenkers tragen.

Aus der EP 3 398 417 A1 ist eine Dreipunktanhängevorrichtung mit einer Haltevorrichtung für einen Oberlenker bekannt. Diese offenbarte Haltevor-richtung für einen Oberlenker weist ein Zugseil auf, das einerseits mit dem Oberlenker lösbar verbunden ist und anderseits in einer Vorrichtung befestigt ist, die aus 2 beabstandeten Platten besteht. Zwischen den Platten ist eine Zugvorrichtung für ein Seil angeordnet, die ähnlich eines Flaschenzuges arbeitet. Durch das Ändern des Achsabstandes der Seilrollen mit Hilfe eines Stellantriebes (Aktuator) wird der Winkel des Oberlenkers bestimmt.

Eine Haltevorrichtung für Oberlenker von der Firma Hydrokit ist aus dem Prospekt "Hilfsseilwinde für Oberlenker" mit Druckvermerk vom November 2019 bekannt. Die genannte Hilfsseilwinde für Oberlenker ist als Bausatz zur Nachrüstung für ein landwirtschaftliches Fahrzeug konzipiert. Für den Antrieb der Hilfsseilwinde ist ein über Schalter bedienbarer Elektromotor vorgesehen. Das auf der Seiltrommel aufgewickelte Seil der Hilfsseilwinde ist mittels eines Karabinerhakens und einer Befestigungsschelle mit dem Oberlenker verbunden. Die Befestigungsschelle ist dabei am Oberlenker in einem möglichst großen Abstand zum fahrzeugseitigen Drehpunkt des Oberlenkers angeordnet. Das Verschwenken des Oberlenkers um den fahrzeugseitigen Drehpunkt wird durch das Auf- und Abwickeln des Seiles bewirkt, dabei wird das Seil zur Verringerung der Seilzugkraft über eine Umlenkrolle zur Seiltrommel geführt. Nach dem Kuppelvorgang des Oberlenkers mit dem Anbaugerät wird der Karabinerhaken vom Oberlenker entfernt.

Nachteilig bei dieser Vorrichtung ist, dass für den Betrieb der Hilfsseilwinde für Oberlenker im Heckanbauraum des Fahrzeuges ein erheblicher Bauraum quer zur Fahrzeuglängsachse benötigt wird. Des Weiteren kann das Durchschieben des Haltebolzens durch die Aufnahmebohrungen für den Oberlenker am Arbeitsgerät und der Kugelgelenkbohrung vom Oberlenker problematisch sein, weil unter Umständen der Benutzer die Hilfsseilwinde, den am Seil hängenden Oberlenker und die Unterlenker verstellen muss, damit die Bohrungen zueinander fluchten. Durch den elektrischen Antrieb ist die Hilfsseilwinde für Oberlenker von einer Stromversorgung abhängig. Zur Vermeidung von Schäden an der Seilwinde muss der Karabinerhaken nach dem Kuppelvorgang mit dem Arbeitsgerät vom Oberlenker entfernt werden.

Weitere Kupplungen sind aus den Dokumenten EP 2 790 483 A1, EP 1 982 853 A1, KR 2015 0007373 A, DE 10 2015 103925 A1 und KR 2012 0113526 A bekannt.

Der Erfindung liegt die Aufgabe zu Grunde, eine Haltevorrichtung für einen Oberlenker so auszubilden, dass der Oberlenker während des Kuppelvorgangs mit dem Arbeitsgerät im zum Kuppeln erforderlichen Schwenkbereich des Oberlenkers flexibel und zuverlässig einstellbar und sicherbar sowie in der Transportstellung fixierbar ist. Zweckmäßigerweise ist die Fixierung für den Oberlenker als selbsttätig sichernde Verriegelung ausgeführt, sodass der Oberlenker in der Transportstellung gegen unkontrolliertes Verschwenken gesichert ist.

Diese Aufgabe wird erfindungsgemäß mit den Merkmalen des Anspruchs 1 gelöst, wobei die weiteren Ansprüche in vorteilhafter Weise ergänzende Lösungen zeigen.

Die erfindungsgemäße fahrzeugseitig vertikal in unterschiedlicher Höhe anbringbare Haltevorrichtung für Oberlenker umfasst einen oder mehrere Kraftspeicher der/die den Oberlenker einer Dreipunktanhängevorrichtung eines landwirtschaftlichen Fahrzeuges, insbesondere Ackerschlepper während des Kuppelvorganges mit dem Anbaugerät unterstützend hält. Dabei führt der Benutzer mit geringer manueller Kraft das Kugelauge oder den Fanghaken des Oberlenkers zum vorgesehenen Kuppelpunkt für den Ober-lenker am Anbaugerät. Durch Verlängern oder Verkürzen des Oberlenkers rastet die Kugel vom Kuppelpunkt des Anbaugerätes selbsttätig im Fanghaken des Oberlenkers ein. Weist der Oberlenker anbaugeräteseitig ein Kugelgelenk mit Bohrung auf, werden zum Verbinden mit dem Anbaugerät durch Verlängern oder Verkürzen des Oberlenkers die Kugelgelenkbohrung vom Oberlenker und die Aufnahmebohrungen für den Oberlenker am Anbau-gerät in eine Flucht gebracht, und mittels eines Haltebolzens werden der Oberlenker und das Anbaugerät verbunden.

Der/die Kraftspeicher ist/sind so dimensioniert, dass der Oberlenker in jedem Schwenkwinkel, der zum Kuppeln des Anbaugerätes notwendig ist, vom Benutzer mit nahezu der gleichen manuellen Kraft verschwenkbar ist. Durch die schmale Bauweise des Kraftspeichers wird zwischen dem Fahrzeug und dem Oberlenker in Richtung Fahrzeuglängsachse nur ein geringer Bauraum benötigt, sodass an der Haltevorrichtung für Oberlenker Beschädigungen durch Fehlbedienung vermieden werden. Besonders vorteilhaft an der erfindungsgemäßen Haltevorrichtung für Oberlenker ist, dass die Haltevorrichtung nach Verbinden des Oberlenkers mit dem Anbaugerät am Oberlenker verbleiben kann.

Die V-förmige Anordnung von Zugfedern oder Gaszugfedern an der Haltevorrichtung für Oberlenker hat den Vorteil, dass der Oberlenker im zum Kuppeln benötigten Schwenkbereich stabil zur Fahrzeuglängsachse ausgerichtet ist und ein sicheres Kuppeln mit dem Anbaugerät gewährleistet. Das Verschwenken des anbaugeräteseitigen Fanghakens oder des Kugelauges vom Oberlenker nach rechts oder links von der Fahrzeuglängsachse erfolgt dabei manuell vom Benutzer, sodass zur Fahrzeuglängsachse ein unkontrolliertes seitliches Verschwenken des Oberlenkers vermieden wird.

Eine einfache und platzsparende Ausgestaltung der Haltevorrichtung für Oberlenker bildet eine Schenkelfeder, die im Bereich der Dreipunktanhänge-vorrichtung am Fahrzeug angeordnet ist und dass der als Hebel dienende Schenkel am Ende lösbar mit dem Oberlenker verbunden ist. Eine weitere Ausgestaltungsmöglichkeit besteht darin, dass die Schenkelfeder als Doppel-feder ausgebildet ist und zwischen den Federwindungen einen U-förmig ausgebildeten Schenkel aufweist, der lösbar mit dem Oberlenker verbunden ist. Die Haltevorrichtung für Oberlenker kann auch jeweils eine rechts und links gewickelte Schenkelfeder aufweisen, die rechts und links neben der Längsachse des Oberlenkers angeordnet sind und am Ende der Schenkel mit dem Oberlenker eine lösbare Verbindung bilden.

Ferner ist eine weitere Haltevorrichtung für Oberlenker denkbar, die ohne zusätzliche elektrische, pneumatische oder hydraulische Energie betreibbar ist. Die Seilwinde weist eine Seiltrommel mit Rückzugsfeder auf, die ein Seil oder eine Kette aufwickelt, ähnlich eines Seilhebezeuges für Werkzeuge oder einer Reversierstartvorrichtung einer Verbrennungskraftmaschine, wobei das aufwickelbare Seil lösbar mit dem Oberlenker verbunden ist und der lösbare Befestigungspunkt des Seiles am Ende des Oberlenkerzylinders in einem möglichst großen Abstand zum fahrzeugseitigen Drehpunkt des Oberlenkers angeordnet ist. Das manuelle Verschwenken des Oberlenkers um den fahrzeugseitigen Drehpunkt durch den Benutzer bewirkt, dass mit Hilfe der Rückzugsfeder das Seil von der Seiltrommel auf- oder abgewickelt wird. Die Rückzugsfeder ist dabei so dimensioniert, dass der Oberlenker in jedem Schwenkwinkel, der zum Kuppeln des Anbaugerätes notwendig ist, mit nahezu der gleichen manuellen Kraft durch den Benutzer verschwenkbar ist.

Eine weitere denkbare Ausführungsform einer Haltevorrichtung für Ober-lenker besteht darin, dass unterhalb des Oberlenkers eine oder mehrere Gasfeder/n angeordnet sind. Eine V-förmige Anordnung von 2 Gasfedern vermeidet ein unkontrolliertes seitliches Verschwenken des Oberlenkers, sodass der Oberlenker vorteilhaft stabil zur Fahrzeuglängsachse ausgerichtet wird. Durch manuelles Verschwenken des am landwirtschaftlichen Fahrzeug befestigten Oberlenkers nach rechts oder links zur Fahrzeuglängsachse führt der Benutzer den Fanghaken oder das Kugelauge kontrolliert und sicher zum Kuppelpunkt des Anbaugerätes.

Denkbar ist ferner eine Haltevorrichtung für Oberlenker, die einen vom Oberlenker lösbaren Hydraulikzylinder mit Schwimmstellung aufweist. Der Hydraulikzylinder ist dabei so konzipiert, dass er einen Stickstoffspeicher oder einen Federspeicher aufweist und während des Kuppelns mit dem Anbaugerät wie eine Gaszugfeder oder Gasfeder arbeitet. Der Benutzer führt dabei den Fanghaken oder das Kugelauge sicher zum Kuppelpunkt des Anbaugerätes. Durch das Kuppeln des Oberlenkers mit dem Anbaugerät wird der Hydraulikzylinder von der Haltevorrichtung in eine Schwimmstellung gebracht, sodass die Haltevorrichtung für Oberlenker nach dem Kuppelvorgang mit dem Anbaugerät mit dem Oberlenker verbunden bleibt. Der als Kraftspeicher dienende Hydraulikzylinder der Haltevorrichtung für Ober-lenker ist nur mit Druckölbeaufschlagbar, wenn der Oberlenker nicht mit dem Anbaugerät gekuppelt ist. Zum Kuppeln des Oberlenkers mit dem Anbaugerät führt der Benutzer den Oberlenker manuell zum Kuppelpunkt des Anbaugerätes. Zum Fixieren der Haltevorrichtung sowie zum Einstellen der Haltekraft für den Oberlenker ist eine Beaufschlagung des Hydraulikzylinders mit Drucköl möglich.

Weitere Merkmale, Einzelheiten und vorteilhafte Ausgestaltungen der Erfindung ergeben sich aus den Ansprüchen, sowie aus der nachfolgenden Beschreibung von Ausführungsbeispielen und der Zeichnung. In der nachstehenden Zeichnung zeigen:
Fig.1 eine Seitenansicht einer vereinfacht dargestellten Dreipunktanhänge-vorrichtung mit einer erfindungsgemäßen Haltevorrichtung für Oberlenker
Fig.2 eine Draufsicht einer erfindungsgemäßen Haltevorrichtung für Ober-lenker mit 2 V-förmig angeordneten Gaszugfedern
Fig.3 eine Draufsicht einer erfindungsgemäßen Haltevorrichtung für Ober-lenker mit 2 V-förmig angeordneten Zugfedern
Fig.4 eine Seitenansicht einer erfindungsgemäßen Haltevorrichtung für Oberlenker mit einer Schenkelfeder
Fig.5 eine Seitenansicht einer erfindungsgemäßen Haltevorrichtung für Oberlenker mit einer Seilwinde
Fig.6 eine Draufsicht einer erfindungsgemäßen Haltevorrichtung für Oberlenker mit 2 V-förmig angeordneten Gasfedern
Fig.7 eine Seitenansicht einer erfindungsgemäßen Haltevorrichtung für Oberlenker mit einem Hydraulikzylinder

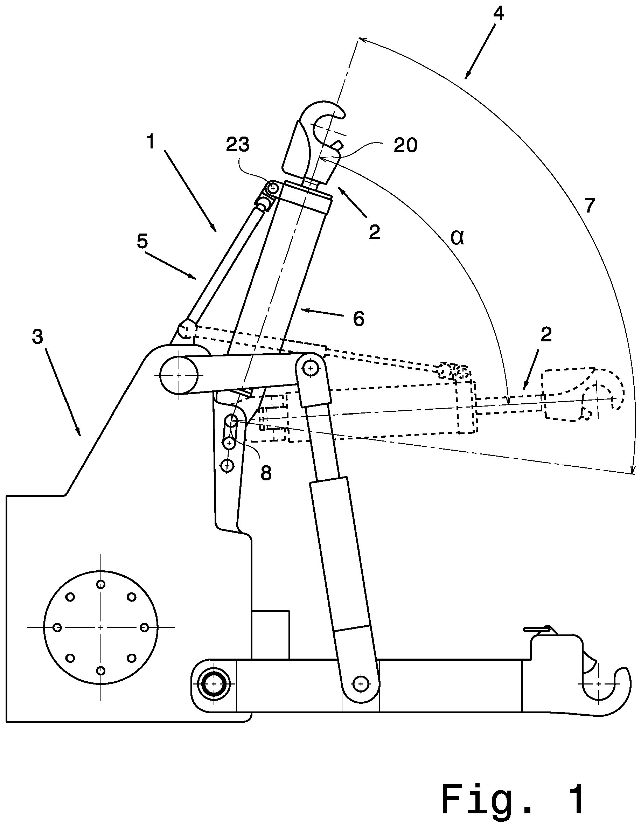

Die in Fig. 1 als Ausführungsbeispiel dargestellte Haltevorrichtung 1 für einen Oberlenker 2 ist zur besseren Übersichtlichkeit an einem vereinfacht dargestellten hinteren Teil eines landwirtschaftlichen Fahrzeuges 3 mit einer Dreipunktanhängevorrichtung 4 dargestellt. Der Oberlenker 2 befindet sich dabei mit der Haltevorrichtung 1 in der Transportstellung 6 und ist gegen unkontrolliertes verschwenken fixiert. Die zum Fixieren selbstsichernde Feststellvorrichtung für den Oberlenker 2 und die Haltevorrichtung 1 zur Vermeidung von unerwünschten Klappergeräuschen ist zur besseren Übersichtlichkeit nicht dargestellt.

Der zur Dreipunktanhängevorrichtung 4 gehörige Oberlenker 2 ist mittels eines Haltebolzens 8 fahrzeugseitig drehbar gelagert und durch eine kardanische Befestigung sowohl auf und ab als auch seitlich verschwenkbar. Alternativ zur kardanischen Befestigung des Oberlenkers 2 besteht die Möglichkeit, den Oberlenker 2 mittels eines Haltebolzens 8 kugelgelenkig zu befestigen.

Anbaugeräteseitig weist der Oberlenker 2 einen selbsttätig verriegelnden Fanghaken 20 auf. Das kuppelbare landwirtschaftliche Anbaugerät ist dabei nicht dargestellt. Alternativ zum Fanghaken 20 kann der Oberlenker 2 eine kugelgelenkige Befestigung aufweisen.

Zum Anhängen eines landwirtschaftlichen Anbaugerätes ist der im Schwenk-winkel α gestrichelt dargestellte Oberlenker 2 durch den Benutzer nach lösen der selbstsichernden Fixierung im Schwenkbereich 7 manuell mit geringer Kraft verschwenkbar. Nach dem Verbinden des Oberlenkers 2 mit dem Anbaugerät bleibt die Haltevorrichtung 1 mit dem Oberlenker 2 verbunden. Zur Schonung des Kraftspeichers 5 besteht die Möglichkeit die Dreipunktanhängevorrichtung 4 in die maximale Aushubstellung anzuheben und die Verbindung zwischen dem Oberlenker 2 und der Haltevorrichtung 1 bei angehobenem Anbaugerät durch Entfernen des Verbindungselementes 23 zu lösen. Zweckmäßigerweise ist das Verbindungselement 23 bolzenförmig ausgebildet. Jedoch muss vor dem Abhängen des Anbaugerätes die Haltevor-richtung 1 mit dem Oberlenker 2 verbunden werden.

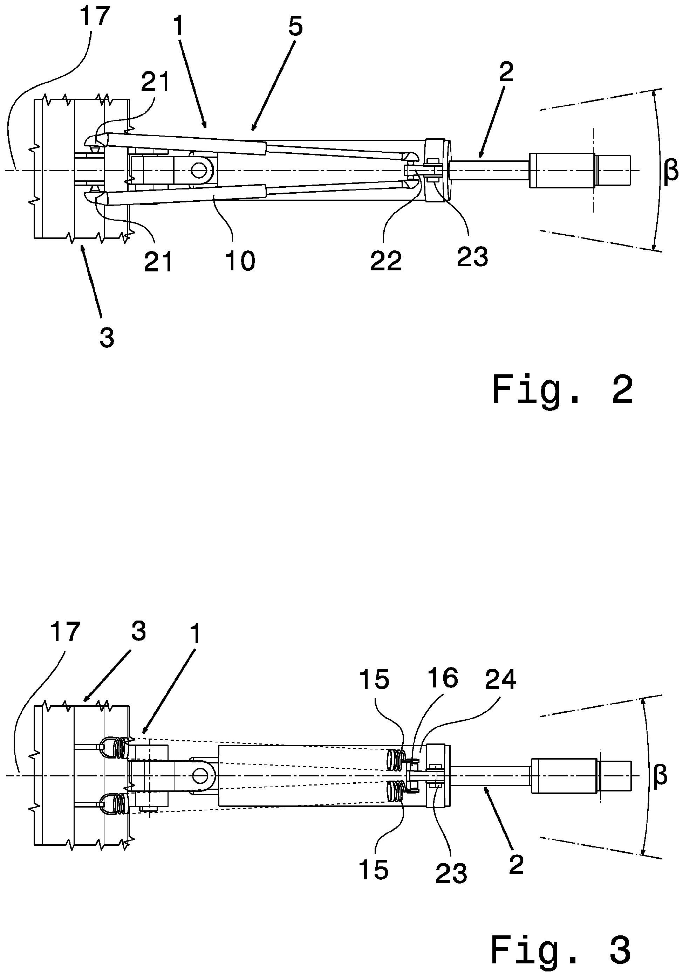

In der Draufsicht zeigt die Fig. 2 einen Oberlenker 2 sowie eine darüber angeordnete Haltevorrichtung 1 mit einem Kraftspeicher 5, der V-förmig angeordnete Gaszugfedern 10 aufweist. Der Oberlenker 2 ist dabei wie bei einem angehängten landwirtschaftlichen Anbaugerät in Arbeitsstellung positioniert. Zylinderseitig hängen die Gaszugfedern 10 beabstandet rechts und links von der Fahrzeuglängsachse 17 am Fahrzeug 3 in Kugelgelenken 21. Der Oberlenker 2 wird anbaugeräteseitig mittels Doppelkugelgelenk 22 und bolzenartigem Verbindungselement 23 von den Gaszugfedern 10 kolben-seitig getragen. Es besteht ferner die Möglichkeit die Gaszugfedern 10 in umgekehrter Lage anzuordnen, sodass die Gaszugfedern 10 kolbenseitig im Kugelgelenk 21 am Fahrzeug 3 hängen. Durch die kugelgelenkige oder kardanische Aufhängung des Oberlenkers 2 und der Gaszugfedern 10 kann der Oberlenker 2 vom Benutzer manuell nach rechts und links von der Fahrzeuglängsachse 17 im Winkel β verschwenkt werden, außerdem bewirkt die V-förmige Anordnung der Gaszugfedern 10, dass sich der Oberlenker 2 zur Fahrzeuglängsachse 17 selbsttätig ausrichtet.

Einen Oberlenker 2 sowie eine darüber angeordnete Haltevorrichtung 1 mit V-förmig angeordneten Zugfedern 15 zeigt die Fig. 3 in der Draufsicht. Fahrzeugseitig sind die Zugfedern 15 beabstandet rechts und links von der Fahrzeuglängsachse 17 am Fahrzeug 3 eingehängt. Am Oberlenker 2 sind die Zugfedern 15 anbaugeräteseitig am Ende des Oberlenkerzylinders 24 im Koppelpunkt 16 lösbar eingehängt. Durch die kardanische oder kugelgelenkige Aufhängung des Oberlenkers 2 kann der Oberlenker 2 vom Benutzer manuell nach rechts und links zur Fahrzeuglängsachse 17 im Winkel β verschwenkt werden. Die V-förmige Anordnung der Zugfedern 15 bewirkt, dass sich der Oberlenker 2 zur Fahrzeuglängsachse 17 selbsttätig ausrichtet.

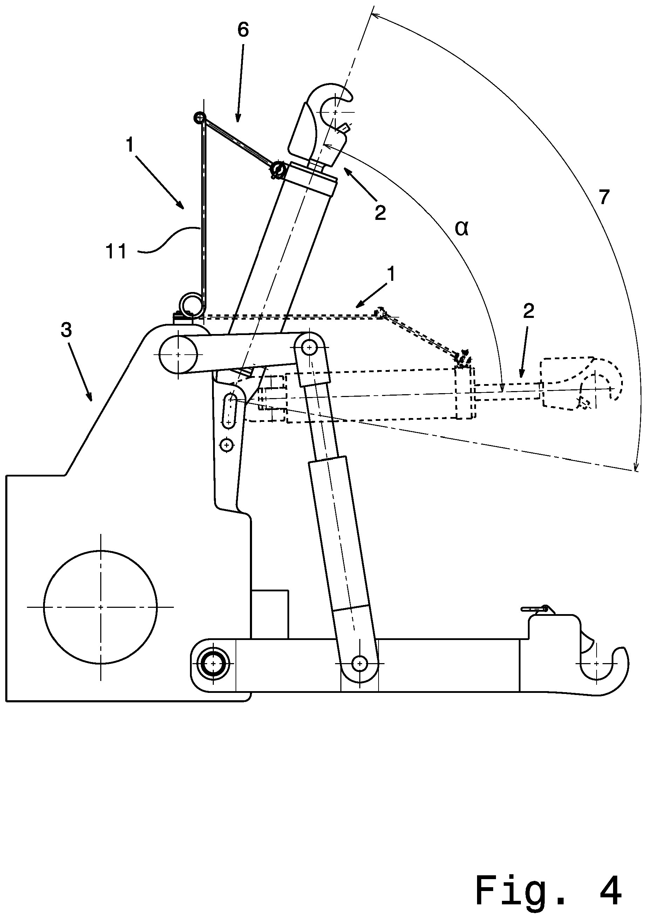

Die in Fig. 4 als Ausführungsbeispiel dargestellte Haltevorrichtung 1 für einen Oberlenker 2 weist eine Schenkelfeder 11 auf, wobei der Oberlenker 2 und die Haltevorrichtung 1 lösbar miteinander verbunden sind und in der Transportstellung 6 gegen unkontrolliertes verschwenken fixiert werden. Zur besseren Übersichtlichkeit ist die selbsttätig sichernde Fixierung für den Oberlenker 2 und die Haltevorrichtung 1 nicht dargestellt. Durch die Fixierung werden unerwünschte Klappergeräusche vermieden. Zur Verdeutlichung der Wirkungsweise der Schenkelfeder 11 sind der Oberlenker 2 und die Haltevorrichtung 1 gestrichelt in einem Schwenkwinkel α dargestellt, der üblicherweise in der Arbeitsstellung des Anbaugerätes vorhanden ist.

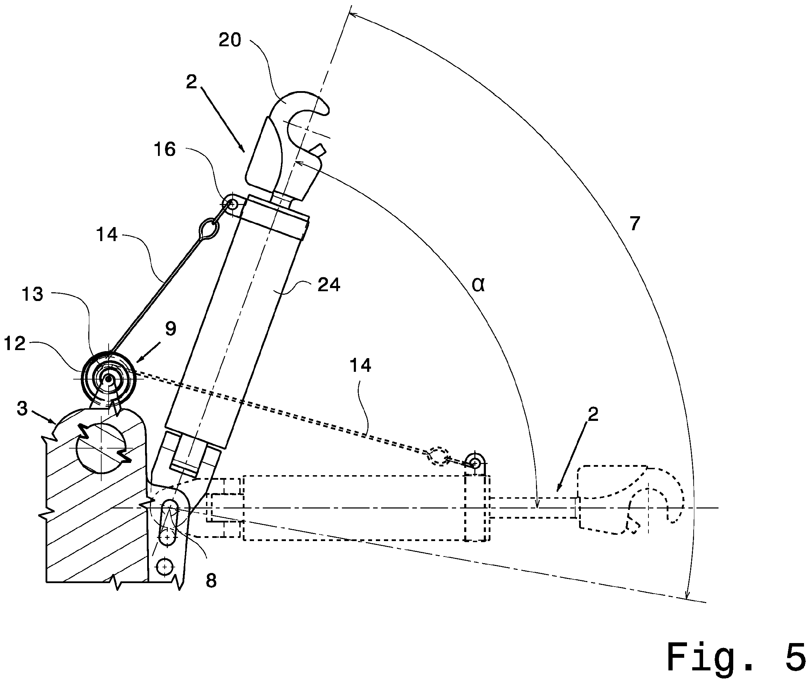

Ein weiteres Ausführungsbeispiel zeigt Fig. 5 in der Seitenansicht. Der fahrzeugseitig mittels eines Haltebolzens 8 befestigte, schwenkbare Ober-lenker 2 hängt beabstandet zum Haltebolzen 8 am Ende des Oberlenkerzylinders 24 im Koppelpunkt 16 an einem lösbaren Seil 14 einer Seilwinde 9. Die unsichtbar dargestellte drehbar gelagerte Seiltrommel 13 der Seilwinde 9 wird von einer spiralförmigen Rückzugsfeder 12 mit einem Drehmoment beaufschlagt, sodass das Seil 14 eine stetige Zugkraft erfährt, wodurch der Oberlenker 2 je nach Schwenkwinkel α in der Schwebe gehalten wird oder durch den Benutzer mit geringer manueller Kraft im Schwenkbereich 7 in den gewünschten Schwenkwinkel α verschwenkt wird.

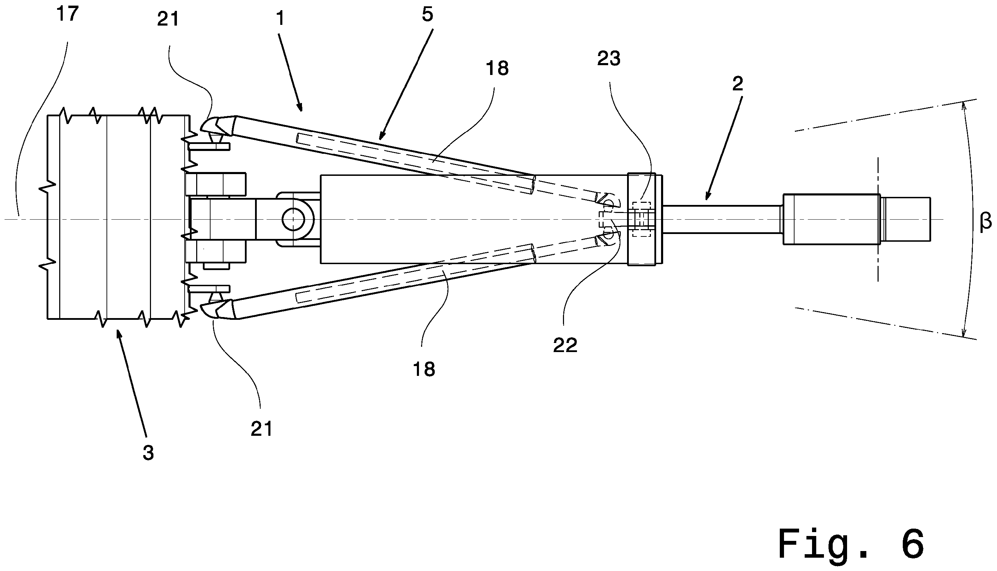

Die Fig. 6 zeigt in der Draufsicht einen Oberlenker 2 sowie eine darunter angeordnete Haltevorrichtung 1 mit einem Kraftspeicher 5, der V-förmig angeordnete Gasfedern 18 aufweist. Der Oberlenker 2 ist dabei wie bei einem angehängten landwirtschaftlichen Anbaugerät in Arbeitsstellung positioniert. Zylinderseitig hängen die Gasfedern 18 beabstandet rechts und links von der Fahrzeuglängsachse 17 am Fahrzeug 3 in Kugelgelenken 21. Der Oberlenker 2 wird anbaugeräteseitig mittels Doppelkugelgelenk 22 und bolzenartigem Verbindungselement 23 von den Gasfedern 18 kolbenseitig getragen. Es besteht ferner die Möglichkeit die Gasfedern 18 in umgekehrter Lage anzuordnen, sodass die Gasfedern 18 kolbenseitig im Kugelgelenk 21 am Fahrzeug 3 hängen. Durch die kugelgelenkige oder kardanische Aufhängung des Oberlenkers 2 und der Gasfedern 18 kann der Oberlenker 2 vom Benutzer manuell nach rechts und links von der Fahrzeuglängsachse 17 im Winkel β verschwenkt werden, außerdem bewirkt die V-förmige Anordnung der Gasfedern 18, dass sich der Oberlenker 2 zur Fahrzeuglängsachse 17 selbsttätig ausrichtet.

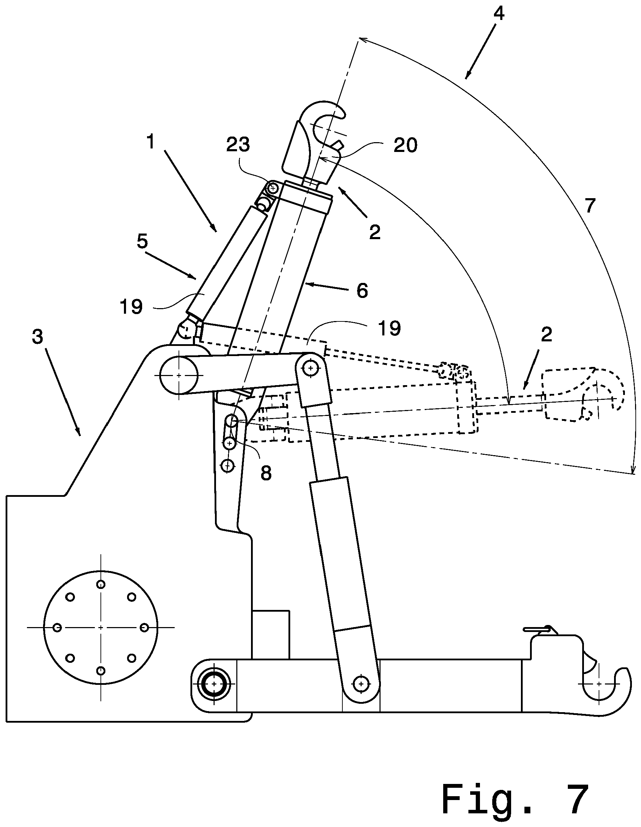

Die in Fig. 7 als Ausführungsbeispiel dargestellte Haltevorrichtung 1 für einen Oberlenker 2 weist einen vom Oberlenker 2 lösbaren Kraftspeicher 5 mit einen Hydraulikzylinder 19 auf, der in der Transportstellung 6 hydraulisch gegen unkontrolliertes verschwenken fixierbar ist. Die hydraulische Fixierung zur Vermeidung von unerwünschten Klappergeräuschen erfolgt nur, wenn der Oberlenker 2 keine Verbindung mit dem Anbaugerät hat. Nach dem Kuppeln des Oberlenkers 2 mit dem Anbaugerät verbleibt der Hydraulikzylinder 19 vom Kraftspeicher 5 am Oberlenker 2 in Schwimmstellung, dabei übt der Hydraulikzylinder 19 nur eine geringe Kraft auf den Ober-lenker 2 aus. sodass die Bewegungen des Anbaugerätes, die der Oberlenker 2 aufnimmt, durch die Schwimmstellung des Hydraulikzylinders 19 kompensiert werden.

**Bezugszeichenliste**

| | | | |
|---|---|---|---|
| 1 | Haltevorrichtung | α | Schwenkwinkel |
| 2 | Oberlenker | β | Winkel |
| 3 | Fahrzeug | | |
| 4 | Dreipunktanhängevorrichtung | | |
| 5 | Kraftspeicher | | |
| 6 | Transportstellung | | |
| 7 | Schwenkbereich | | |
| 8 | Haltebolzen | | |
| 9 | Seilwinde | | |
| 10 | Gaszugfeder | | |
| 11 | Schenkelfeder | | |
| 12 | Rückzugsfeder | | |
| 13 | Seiltrommel | | |
| 14 | Seil | | |
| 15 | Zugfeder | | |
| 16 | Koppelpunkt | | |
| 17 | Fahrzeuglängsachse | | |
| 18 | Gasfeder | | |
| 19 | Hydraulikzylinder | | |
| 20 | Fanghaken | | |
| 21 | Kugelgelenk | | |
| 22 | Doppelkugelgelenk | | |
| 23 | Verbindungselement | | |
| 24 | Oberlenkerzylinder | | |

## Patentansprüche

1. Haltevorrichtung (1) mit einem Oberlenker (2) einer Dreipunktanhängevorrichtung (4) zum Anbau von Arbeitsgeräten an einem landwirtschaftlichen Fahrzeug (3), **dadurch gekennzeichnet, dass** die Haltevorrichtung (1) einen oder mehrere Kraftspeicher (5) umfasst, die so dimensioniert sind, dass der Oberlenker (2) insbesondere während des Kuppelvorganges mit dem Arbeitsgerät im Schwenkbereich (7) in jedem Schwenkwinkel (α) haltbar ist, der Oberlenker (2) in jedem Schwenkwinkel (α), der zum Kuppeln des Anbaugerätes notwendig ist, von einem Benutzer mit nahezu der gleichen manuellen Kraft verschwenkbar ist und elastisch zur Fahrzeuglängsachse (17) ausrichtbar ist.

2. Haltevorrichtung (1) mit einem Oberlenker (2) nach Anspruch 1, **dadurch gekennzeichnet, dass** der Kraftspeicher (5) als Gaszugfeder (10) ausgebildet ist, die eingerichtet ist, den Oberlenker (2) lösbar mit dem Fahrzeug (3) zu verbinden.

3. Haltevorrichtung (1) mit einem Oberlenker (2) nach Anspruch 1 und 2, **dadurch gekennzeichnet, dass** der Kraftspeicher (5) zwei V-förmig angeordnete Gaszugfedern (10) aufweist, die einerseits mittels eines bolzenartigen Verbindungselementes (23) lösbar am Ende des Oberlenkerzylinders (24) mit dem Oberlenker (2) verbunden sind und andererseits beabstandet quer zur Fahrzeuglängsachse (17) am Fahrzeug (3) anordenbar sind.

4. Haltevorrichtung (1) mit einem Oberlenker (2) nach Anspruch 1, **dadurch gekennzeichnet, dass** der Kraftspeicher (5) eine vorgespannte Zugfeder (15) aufweist, die den Oberlenker (2) mit dem Fahrzeug (3) lösbar verbindet.

5. Haltevorrichtung (1) mit einem Oberlenker (2) nach Anspruch 1 und 4, **dadurch gekennzeichnet, dass** der Kraftspeicher (5) zwei V-förmig angeordnete Zugfedern (15) aufweist, die einerseits an einem Koppelpunkt (16) lösbar am Ende des Oberlenkerzylinders (24) mit dem Oberlenker (2) verbindbar sind und andererseits beabstandet quer zur Fahrzeuglängsachse (17) am Fahrzeug (3) anordenbar sind.

6. Haltevorrichtung (1) mit einem Oberlenker (2) nach Anspruch 1, **dadurch gekennzeichnet, dass** der Kraftspeicher (5) eine oder mehrere vom Oberlenker (2) lösbare Schenkelfeder/n (11) aufweist.

7. Haltevorrichtung (1) mit einem Oberlenker (2) nach Anspruch 1, **dadurch gekennzeichnet, dass** der Kraftspeicher (5) eine Seilwinde (9) aufweist, wobei eine Rückzugsfeder (12) ein Drehmoment auf eine drehbar gelagerte Seiltrommel (13) ausübt und mittels eines Seiles (14) und/oder einer Kette mit den Oberlenker (2) lösbar verbunden ist.

8. Haltevorrichtung (1) mit einem Oberlenker (2) nach Anspruch 1, **dadurch gekennzeichnet, dass** der Kraftspeicher (5) als Gasfeder (18) ausgebildet ist, die eingerichtet ist, den Oberlenker (2) lösbar mit dem Fahrzeug (3) zu verbinden.

9. Haltevorrichtung (1) mit einem Oberlenker (2) nach Anspruch 1 und 8, **dadurch gekennzeichnet, dass** der Kraftspeicher (5) zwei V-förmig angeordnete Gasfedern (18) aufweist und einerseits mittels eines bolzenartigen Verbindungselementes (23) lösbar am Ende des Oberlenkerzylinders (24) mit dem Oberlenker (2) verbindbar sind und andererseits beabstandet quer zur Fahrzeuglängsachse (17) am Fahrzeug (3) anordenbar sind.

10. Haltevorrichtung (1) mit einem Oberlenker (2) nach Anspruch 1, **dadurch gekennzeichnet, dass** der Kraftspeicher (5) einen vom Oberlenker (2) lösbaren Hydraulikzylinder (19) mit Schwimmstellung aufweist.

11. Haltevorrichtung (1) mit einem Oberlenker (2) nach Anspruch 1 bis 10, **dadurch gekennzeichnet, dass** der Kraftspeicher (5) oder der Oberlenker (2) in der Transportstellung (6) des Oberlenkers (2) eine lösbare Feststellvorrichtung aufweist, die zweckmäßigerweise selbsttätig verriegelt.

## Claims

1. A holding device (1) with an upper link (2) of a three point linkage device (4) for the attachment of working implements to an agricultural vehicle (3), **characterized in that** the holding device (1) comprises one or more energy storing devices (5) which have dimensions such that the upper link (2) can be held at any pivot angle (α) in the pivot range (7), in particular during the procedure for coupling to the working implement, the upper link (2) can be pivoted by an operator and can be flexibly orientated with respect to the longitudinal axis of the vehicle using almost the same manual force at any pivot angle (α) which is necessary in order to couple the mounted implement.

2. The holding device (1) with an upper link (2) according to claim 1, **characterized in that** the energy storing device (5) is constructed as a tension gas spring (10) which is configured to releasably connect the upper link (2) to the vehicle (3).

3. The holding device (1) with an upper link (2) according to claim 1 and claim 2, **characterized in that** the energy storing device (5) has two tension gas springs (10) disposed in a V-shape which on the one hand are releasably connected to the upper link (2) by means of a bolt-like connecting element (23) at the end of the upper link cylinder (24), and on the other hand can be disposed on the vehicle (3) at a distance transverse to the longitudinal axis (17) of the vehicle.

4. The holding device (1) with an upper link (2) according to claim 1, **characterized in that** the energy storing device (5) has a pre-loaded tension spring (15) which releasably connects the upper link (2) to the vehicle (3).

5. The holding device (1) with an upper link (2) according to claim 1 and claim 4, **characterized in that** the energy storing device (5) has two tension springs (15) disposed in a V-shape which on the one hand can be releasably connected to the upper link (2) at a coupling point (16) at the end of the upper link cylinder (24), and on the other hand can be disposed on the vehicle (3) at a distance transverse to the longitudinal axis (17) of the vehicle (3).

6. The holding device (1) with an upper link (2) according to claim 1, **characterized in that** the energy storing device (5) has one or more leg spring(s) (11) which can be released from the upper link (2).

7. The holding device (1) with an upper link (2) according to claim 1, **characterized in that** the energy storing device (5) has a cable winch (9), wherein a return spring (12) exerts a torque on a rotatably mounted cable drum (13) and is releasably connected to the upper link (2) by means of a cable (14) and/or a chain.

8. The holding device (1) with an upper link (2) according to claim 1, **characterized in that** the energy storing device (5) is configured as a gas spring (18) which is arranged to releasably connect the upper link (2) to the vehicle (3).

9. The holding device (1) with an upper link (2) according to claim 1 and claim 8, **characterized in that** the energy storing device (5) has two gas springs (18) disposed in a V-shape and on the one hand can be releasably connected to the upper link (2) by means of a bolt-like connecting element (23) at the end of the upper link cylinder (24), and on the other hand can be disposed on the vehicle (3) at a distance transverse to the longitudinal axis of the vehicle (17).

10. The holding device (1) with an upper link (2) as claimed in claim 1, **characterized in that** the energy storing device (5) has a hydraulic cylinder (19) with float position which can be released from the upper link (2).

11. The holding device (1) with an upper link (2) according to claims 1 to 10, **characterized in that** in the transport position (6) of the upper link (2), the energy storing device (5) or the upper link (2) has a releasable locking device which automatically locks when appropriate.

## Revendications

1. Dispositif de retenue (1) comprenant un bras supérieur (2) d'un dispositif d'attelage à trois points (4) destiné à l'attelage d'outils de travail sur un véhicule agricole (3), **caractérisé en ce que** le dispositif de retenue (1) comprend un ou plusieurs accumulateurs d'énergie (5) qui sont dimensionnés de manière à ce que le bras supérieur (2) puisse être maintenu dans chaque angle de pivotement (α) dans la zone de pivotement (7), notamment pendant l'opération d'accouplement avec l'outil de travail, que le bras supérieur (2) puisse être pivoté par un utilisateur avec quasiment la même force manuelle dans chaque angle de pivotement (α) nécessaire à l'accouplement de l'outil de travail, et puisse être orienté de manière élastique par rapport à l'axe longitudinal de véhicule (17).

2. Dispositif de retenue (1) comprenant un bras supérieur (2) selon la revendication 1, **caractérisé en ce que** l'accumulateur d'énergie (5) est réalisé sous forme de ressort de traction à gaz (10) qui est agencé pour relier le bras supérieur (2) de façon amovible au véhicule (3).

3. Dispositif de retenue (1) comprenant un bras supérieur (2) selon la revendication 1 et 2, **caractérisé en ce que** l'accumulateur d'énergie (5) présente deux ressorts de traction à gaz (10) qui sont disposés en forme de V et sont reliés sur un côté, à l'aide d'un élément d'assemblage (23) en forme de boulon, de façon amovible au bras supérieur (2), à l'extrémité du cylindre de bras supérieur (24), et peuvent être disposés avec l'autre côté sur le véhicule (3), avec un espacement, transversalement à l'axe longitudinal de véhicule (17).

4. Dispositif de retenue (1) comprenant un bras supérieur (2) selon la revendication 1, **caractérisé en ce que** l'accumulateur d'énergie (5) présente un ressort de traction (15) sous précontrainte, qui relie le bras supérieur (2) de façon amovible au véhicule (3).

5. Dispositif de retenue (1) comprenant un bras supérieur (2) selon la revendication 1 et 4, **caractérisé en ce que** l'accumulateur d'énergie (5) présente deux ressorts de traction à gaz (15) qui sont disposés en forme de V et peuvent être reliés sur un côté, en un point d'accouplement (16), de façon amovible au bras supérieur (2), à l'extrémité du cylindre de bras supérieur (24), et peuvent être disposés avec l'autre côté sur le véhicule (3), avec un espacement, transversalement à l'axe longitudinal de véhicule (17).

6. Dispositif de retenue (1) comprenant un bras supérieur (2) selon la revendication 1, **caractérisé en ce que** l'accumulateur d'énergie (5) présente un ou plusieurs ressorts à branches (11) pouvant être détachés du bras supérieur (2).

7. Dispositif de retenue (1) comprenant un bras supérieur (2) selon la revendication 1, **caractérisé en ce que** l'accumulateur d'énergie (5) présente un treuil à câble (9), un ressort de rappel (12) exerçant un couple sur un tambour à câble (13) monté avec possibilité de rotation, et étant relié de façon amovible au bras supérieur (2) à l'aide d'un câble (14) et/ou d'une chaîne.

8. Dispositif de retenue (1) comprenant un bras supérieur (2) selon la revendication 1, **caractérisé en ce que** l'accumulateur d'énergie (5) est réalisé sous forme de ressort à gaz (18) qui est agencé pour relier le bras supérieur (2) de façon amovible au véhicule (3).

9. Dispositif de retenue (1) comprenant un bras supérieur (2) selon la revendication 1 et 8, **caractérisé en ce que** l'accumulateur d'énergie (5) présente deux ressorts à gaz (18) disposés en V et peuvent être reliés avec un côté, à l'aide d'un élément d'assemblage (23) en forme de boulon, de façon amovible au bras supérieur (2), à l'extrémité du cylindre de bras supérieur (24), et peuvent être disposés avec l'autre côté sur le véhicule (3), avec un espacement, transversalement à l'axe longitudinal de véhicule (17).

10. Dispositif de retenue (1) comprenant un bras supérieur (2) selon la revendication 1, **caractérisé en ce que** l'accumulateur d'énergie (5) présente un vérin hydraulique (19) à position flottante, qui peut être détaché du bras supérieur (2).

11. Dispositif de retenue (1) comprenant un bras supérieur (2) selon la revendication 1 à 10, **caractérisé en ce que** dans la position de transport (6) du bras supérieur (2), l'accumulateur d'énergie (5) ou le bras supérieur (2) présente un dispositif de blocage libérable qui est de manière judicieuse à verrouillage automatique.
